(19) Europäisches Patentamt / European Patent Office / Office européen des brevets

(11) **EP 4 247 674 B1**

(12) **FASCICULE DE BREVET EUROPÉEN**

(45) Date de publication et mention
de la délivrance du brevet:
**19.03.2025 Bulletin 2025/12**

(21) Numéro de dépôt: **21807155.3**

(22) Date de dépôt: **22.11.2021**

(51) Classification Internationale des Brevets (IPC):
**B60T 8/00** *(2006.01)*   **B60T 13/74** *(2006.01)*
**H02K 7/102** *(2006.01)*   **H02P 15/00** *(2006.01)*
**H02P 29/00** *(2016.01)*   **H02P 29/40** *(2016.01)*
**B60T 13/00** *(2006.01)*

(52) Classification Coopérative des Brevets (CPC):
**B60T 8/00; B60T 13/00; B60T 13/74; H02K 49/00;
H02P 3/04; H02P 23/12**

(86) Numéro de dépôt international:
**PCT/EP2021/082564**

(87) Numéro de publication internationale:
**WO 2022/106708 (27.05.2022 Gazette 2022/21)**

(54) **PROCÉDÉ DE COMMANDE DE COUPLE DE SERRAGE D'UN FREIN ÉLECTROMÉCANIQUE**

VERFAHREN ZUR STEUERUNG DES ANZUGMOMENTS EINER ELEKTROMECHANISCHEN
BREMSE

METHOD FOR CONTROLLING THE TIGHTENING TORQUE OF AN ELECTROMECHANICAL
BRAKE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.11.2020 FR 2012031**

(43) Date de publication de la demande:
**27.09.2023 Bulletin 2023/39**

(73) Titulaire: **Hitachi Astemo France
93700 Drancy (FR)**

(72) Inventeur: **RAMDANE, Abdessamed
60000 Beauvais (FR)**

(74) Mandataire: **LLR
2, rue Jean Lantier
75001 Paris (FR)**

(56) Documents cités:
**EP-A1- 3 072 759      WO-A1-2019/012799
WO-A1-2019/151146**

**Description**

L'invention se rapporte au domaine des actionneurs de freinage de véhicule automobile, plus particulièrement les freins électromécaniques, et les procédés permettant de réguler leur couple de serrage.

Un système de freinage d'un véhicule automobile comporte en général des moyens mécaniques de serrage du frein comprenant notamment des moyens de friction, tels que des plaquettes de frein, reliés à un actionneur apte à déplacer ces moyens de friction en direction d'un rotor lié en rotation à une roue du véhicule pour l'enserrer et ainsi freiner le véhicule par friction, ou de les écarter dans le but de cesser le freinage. Dans le cas d'un frein électromécanique, les moyens mécaniques de serrage sont commandés par un moteur électrique muni d'un arbre rotatif qui les entraîne.

Pour commander le couple de serrage de freins électromécaniques pour véhicule, il est connu de l'état de la technique de procéder en régulant le couple de serrage en fonction d'indicateurs basés sur des données issues de capteurs. Ces derniers sont en général placés au niveau du moteur électrique ou de l'actionneur déplaçant les moyens de friction. Par exemple, il est connu d'utiliser les données issues d'un capteur d'efforts entre le moteur et l'actionneur pour asservir la commande de couple de serrage du frein et ainsi tenter d'obtenir la décélération du véhicule désirée.

Toutefois, outre le coût et la complexité induits par la mise en place et l'exploitation d'un tel capteur d'efforts, celui-ci ne permet de tenir compte que des facteurs influençant le couple de serrage dépendants du moteur électrique et de l'actionneur. En particulier, il ne permet pas de rendre compte des facteurs liés au reste du système de freinage, et encore moins du véhicule automobile en général et de son environnement, comme par exemple le gonflement des plaquettes de frein sous l'effet de la chaleur entraîné par le freinage, l'état de la route sur lequel roule le véhicule, etc.

Le document WO 2019/151146 A1 décrit un procédé de commande de couple de serrage d'un frein électromécanique pour véhicule automobile comprenant une étape de détermination d'un observateur de couple de réaction, qui caractérise au moins une réaction des moyens mécaniques de serrage du frein à l'action du moteur électrique du frein sur ces moyens mécaniques de serrage, et une étape de régulation du couple de serrage en fonction de l'observateur de couple de réaction.

L'invention a ainsi pour but de fournir un procédé de commande d'un couple de serrage d'un frein électromécanique qui soit économique et qui tienne compte de différents paramètres pour réguler le couple de serrage de manière précise.

À cet effet, l'invention a pour objet un procédé de commande de couple de serrage d'un frein électromécanique pour véhicule automobile, le frein comportant un moteur électrique muni d'un arbre rotatif destiné à entrainer des moyens mécaniques de serrage du frein, le procédé comprenant les étapes suivantes :

- détermination d'un indicateur, dit observateur de couple de réaction, qui caractérise au moins une réaction des moyens mécaniques de serrage du frein à l'action du moteur électrique sur ces moyens mécaniques de serrage, en fonction d'une vitesse de rotation de l'arbre rotatif du moteur électrique et d'une intensité d'un courant d'alimentation électrique du moteur électrique, et
- régulation du couple de serrage du frein en fonction de l'observateur de couple de réaction.

Ainsi, la présence d'un capteur de force pour mesurer le couple de réaction des moyens mécanique de serrage du frein à l'action du moteur électrique sur ceux-ci n'est pas nécessaire. En effet, l'observateur de couple de réaction permet d'estimer ce couple de réaction à partir de paramètres qui sont déjà connus ou mesurés par ailleurs, à savoir l'intensité du courant d'alimentation électrique du moteur électrique et la vitesse de rotation de l'arbre rotatif du moteur électrique. L'observateur de couple de réaction permet ainsi d'estimer, à partir d'informations relatives au moteur électrique (intensité du courant d'alimentation et vitesse de rotation de l'arbre rotatif) des informations sur les éléments qui se trouvent en aval de ce moteur, à savoir les moyens mécaniques de serrage du frein, sans avoir à ajouter de capteur. Comme indiqué précédemment, le couple de réaction des moyens mécaniques de serrage du frein est dépendant de conditions externes, comme par exemple, le gonflement des plaquettes de frein sous l'effet de la chaleur entraîné par le freinage ou des différents composants du frein. En estimant ce couple de réaction grâce à l'observateur de couple de réaction, il est donc possible de réguler le couple de serrage du frein de manière précise afin d'assurer un freinage le plus précis et le plus sécurisé possible.

La régulation du couple de serrage du frein consiste à commander une augmentation ou une diminution de l'effort de serrage des moyens mécaniques de serrage du frein en fonction de l'observateur de couple de réaction. Par exemple, si l'estimation du couple de réaction fournie par l'observateur de couple de réaction indique qu'il est nécessaire d'augmenter l'effort de serrage pour obtenir une décélération souhaitée, on commande une augmentation de l'effort de serrage. Si l'estimation de couple de réaction fournie par l'observateur de couple de réaction indique qu'il est nécessaire de réduire l'effort de serrage pour obtenir une décélération souhaitée, on commande une diminution de l'effort de serrage.

Le procédé est économique puisqu'aucun capteur supplémentaire n'est nécessaire, en particulier aucun capteur d'efforts, et permet de prendre en compte les conditions réelles de serrage des moyens mécaniques de serrage du frein en temps réel.

Selon un mode de réalisation, l'observateur de couple de réaction comprend un filtre passe haut configuré pour réduire des perturbations causées par une variation de vitesse du moteur électrique.

Une telle variation de vitesse a lieu, par exemple, lors d'une accélération du moteur.

Selon un mode de réalisation, l'observateur de couple de réaction comprend un filtre passe bas.

Avantageusement, l'observateur de couple de réaction ($OBs_{CR}$) est estimé selon la relation suivante :

[Math.1]

$$Obs_{CR} = \left( \left( (I_q \times K_n) + (J_n \times wc \times \Omega_m) \right) - \left( \Delta j \times \omega - \Delta k \times I_q \right) - C \right) \times \left( \frac{wc}{p+wc} \right) - (J_n \times wc \times \Omega_m)$$

dans laquelle,

$I_q$ correspond à l'intensité du courant d'alimentation électrique du moteur électrique,

$K_n$ correspond au coefficient nominal de couple du moteur,

$J_n$ correspond à l'inertie nominale du moteur,

wc correspond à la fréquence de coupure d'un filtre passe bas,

$\Omega_m$ correspond à la vitesse de rotation de l'arbre rotatif du moteur,

p correspond à la variable de Laplace,

$\Delta j$ correspond à la variation de la valeur d'inertie du frein,

$\Delta k$ correspond à la variation de la valeur du couple de serrage du frein,

C correspond au coefficient de friction nominal du frein, et

$\omega$ correspond à l'accélération de la rotation de l'arbre rotatif du moteur électrique.

L'application de cette relation permet d'obtenir une bonne estimation du couple de réaction des moyens mécaniques de serrage du frein et donc de réguler le couple de serrage du frein de manière précise.

Notamment, la partie ($I_q \times K_n$) de cette relation correspond au couple moteur utilisé pour accélérer le moteur électrique. Son unité est le N.m. Ce couple est donc proportionnel à l'intensité $I_q$ du courant d'alimentation électrique du moteur électrique.

La partie ($J_n \times wc \times \Omega_m$) de cette relation correspond au couple d'accélération du moteur. Il traduit la réaction du moteur au couple qui a été utilisé pour l'accélérer. Son unité est donc également le N.m.

La partie - ($\Delta j \times \omega - \Delta k \times I_q$) de cette relation correspond à la différence relative du couple utile par rapport au couple nominal. Cette différence permet de renseigner sur les pertes de couple utile, par exemple sous formes de frottements ou de bruits.

La partie ( $\frac{wc}{p+wc}$ ) de cette relation correspond à un filtre passe bas et permet de réduire les perturbations causées par des variations de la vitesse du moteur, par exemple durant une accélération de celui-ci ou durant une étape de contrôle.

La partie - ($J_n \times wc \times \Omega_m$) de cette relation correspond, comme indiqué précédemment, au couple d'accélération du moteur.

Dans un mode de réalisation, le procédé comprend en outre une étape de détermination d'un indicateur, dit observateur de perturbation du couple de serrage, qui caractérise au moins une perturbation susceptible de perturber la détermination de l'observateur de couple de réaction, en fonction de la vitesse de rotation de l'arbre rotatif du moteur électrique et de l'intensité du courant d'alimentation électrique du moteur électrique, l'étape de régulation du couple de serrage du frein se faisant en outre en fonction de l'observateur de perturbation du couple de serrage.

Il est ainsi possible de réduire les bruits qui perturbent la détermination de l'observateur de couple de réaction de manière à ce que ce l'estimation de couple de réaction soit plus précise et donc que la régulation du couple de serrage du frein soit également plus précise.

Selon un mode de réalisation, l'observateur de perturbation du couple de serrage comprend un filtre passe bas configuré pour réduire les perturbations de hautes fréquences.

Avantageusement, l'observateur de perturbation du couple de serrage ($Obs_{CS}$) est estimé selon la relation suivante :

[Math.2]

$$Obs_{CS} = \left( \left( \left( I_q \times K_n \right) + \left( J_n \times wc \times \Omega_m \right) \right) \times \left( \frac{wc}{p + wc} \right) \right) + \left( J_n \times wc \times \Omega_m \right)$$

dans laquelle,

$I_q$ correspond à l'intensité du courant d'alimentation électrique du moteur électrique,
$K_n$ correspond au coefficient nominal de couple du moteur,
$J_n$ correspond à l'inertie nominale du moteur,
wc correspond à la fréquence de coupure d'un filtre passe bas,
$\Omega_m$ correspond à la vitesse de rotation de l'arbre rotatif du moteur, et
p correspond à la variable de Laplace.

L'application de cette relation permet d'obtenir une bonne estimation d'une perturbation susceptible de perturber la détermination de l'observateur de couple de réaction et donc de réduire le bruit et obtenir une estimation plus précise du couple de réaction du frein.

Comme précédemment, la portion $(I_q \times K_n)$ de cette relation correspond au couple moteur utilisé pour accélérer le moteur électrique. Son unité est le N.m. Ce couple est donc proportionnel à l'intensité $I_q$ du courant d'alimentation électrique du moteur électrique.

La portion $(J_n \times wc \times \Omega_m)$ de cette relation correspond au couple d'accélération du moteur. Il traduit la réaction du moteur au couple qui a été utilisé pour l'accélérer. Son unité est donc également le N.m.

La portion ( $\frac{wc}{p + wc}$ ) de cette relation correspond à un filtre passe bas qui permet de réduire les perturbations de hautes fréquences.

Dans un mode de réalisation, le moteur électrique est compris dans un ensemble motoréducteur de type irréversible.

La mise en œuvre d'un motoréducteur irréversible permet d'utiliser le frein, en plus de sa fonction de frein de service, en tant que frein de parking. La mise en œuvre d'un motoréducteur irréversible permet le maintien d'un couple de freinage constant sans consommation électrique, par exemple lors d'un arrêt du véhicule à un feux rouge ou lors de la descente d'une pente par le véhicule.

Avantageusement, le moteur étant un moteur triphasé, le procédé comprend une étape de transformation de trois courants du moteur triphasé en un courant direct d'intensité nulle et un courant quadratique, l'intensité du courant d'alimentation électrique du moteur électrique utilisée pour la détermination de l'observateur de couple de réaction et/ou de l'observateur de perturbation du couple de serrage correspondant à l'intensité du courant quadratique du moteur électrique.

L'intensité du courant quadratique est proportionnelle à l'effort du moteur. L'utilisation de ce courant quadratique permet donc de caractériser facilement cet effort.

L'invention a également pour objet un frein électromécanique pour véhicule automobile comprenant des moyens de mise en œuvre du procédé décrit ci-dessus.

L'invention a en outre pour objet un véhicule automobile comprenant au moins un frein électromécanique tel que décrit ci-dessus.

**Brève description des figures**

L'invention sera mieux comprise à la lecture de la description qui va suivre donnée uniquement à titre d'exemple et faite en se référant aux dessins annexés dans lesquels :

[Fig.1] la [Fig.1] est un schéma représentant un ordinogramme de fonctionnement du procédé de commande de couple de serrage d'un frein électromécanique selon un mode de réalisation de l'invention.
[Fig.2] la [Fig.2] est un graphique représentant une première simulation de commande d'un couple de serrage et d'une estimation du couple de serrage obtenue par le procédé selon un mode de réalisation de l'invention.
[Fig.3] la [Fig.3] est un graphique représentant une deuxième simulation de commande d'un couple de serrage et d'une estimation de couple de serrage obtenue par le procédé selon un mode de réalisation de l'invention.
[Fig.4] la [Fig.4] est une vue en perspective éclatée d'un frein électromécanique selon un mode de réalisation de l'invention.

**Description détaillée**

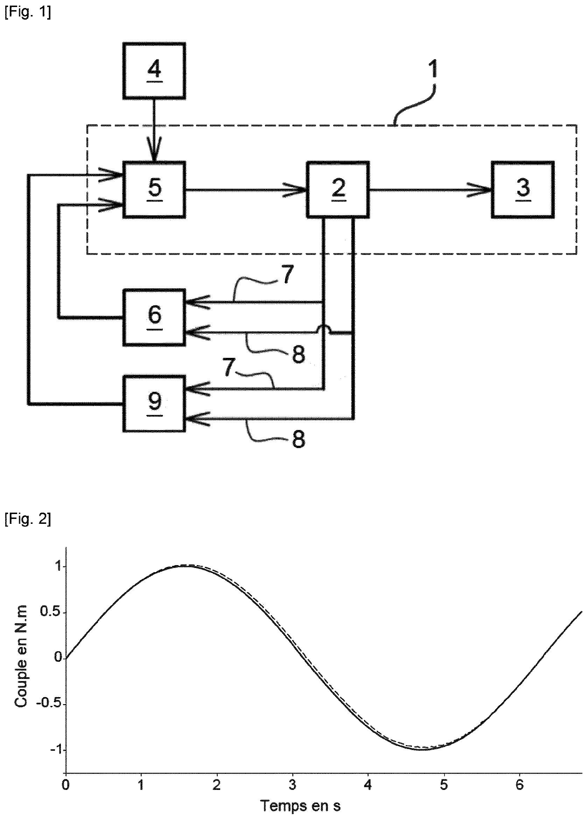

On a représenté sur la [Fig.1] un schéma représentant un ordinogramme de fonctionnement du procédé de commande de couple de serrage d'un frein électromécanique 1 selon un mode de réalisation de l'invention.

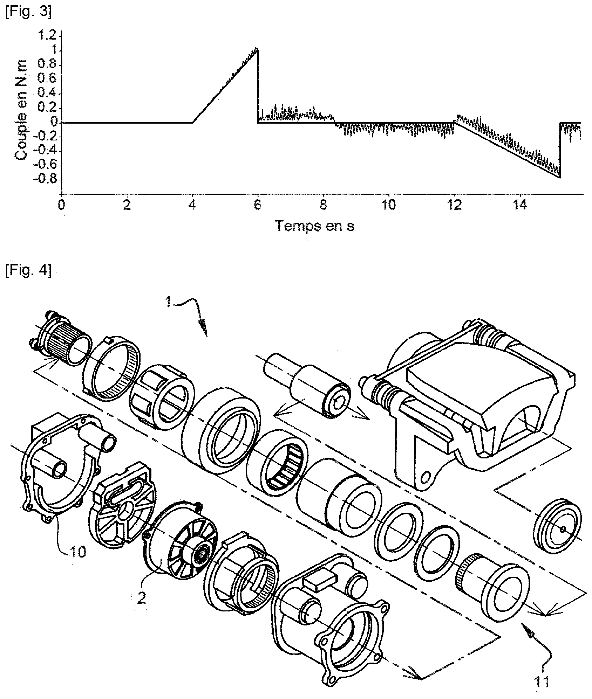

Le frein électromécanique 1 comprend, de façon classique, un moteur électrique 2 muni d'un arbre rotatif destiné à entraîner des moyens mécaniques de serrage du frein 3. Avantageusement, le frein électromécanique 1 selon l'invention comprend un réducteur mécanique 11 de vitesse augmentant le couple de sortie. Le moteur électrique 2 est de préférence un moteur électrique sans balais (« brushless » en terminologie anglo-saxonne). Le frein électromécanique 1 comprend également une unité de contrôle électronique 10 permettant la mise en œuvre du procédé décrit ci-dessous. S'agissant d'un frein électromécanique 1 connu en soi et représenté à la [Fig.4], il ne sera pas décrit davantage ici.

Les moyens mécaniques de serrage du frein 3 sont commandés par une commande 4 de couple de serrage. Afin de commander le couple de serrage de frein 1, on génère une commande de décélération, qui correspond à une décélération souhaitée pour le véhicule automobile équipé de ce frein 1. Cette commande de décélération peut, par exemple, provenir d'un conducteur du véhicule, en actionnant une pédale de frein, et cette commande est transmise à un organe de requête de décélération. La commande de décélération peut également provenir d'un ordinateur contrôlant un véhicule autonome, ou encore un poste de commande contrôlant le véhicule à distance.

La commande de décélération désirée est convertie en commande 4 de serrage brute à l'aide d'un modèle de conversion de décélération, connu en soi, donnant le couple de serrage en fonction de la commande de décélération.

La commande 4 de serrage brute ainsi obtenue est envoyée vers un organe de contrôle de décélération 5 qui, au cours d'une étape de contrôle de la commande de décélération, va obtenir des informations de divers indicateurs et ajuster la commande de couple de serrage brute. Dans le cas de la présente invention, ces indicateurs sont notamment un observateur de couple de réaction et un observateur de perturbation du couple de serrage du frein qui seront détaillés ci-dessous. La commande 4 de couple de serrage brute est convertie en couple de serrage à atteindre, en fonction de ces indicateurs.

La commande de couple de serrage à atteindre est transmise au moteur 2 et est notamment convertie en une commande d'intensité du courant électrique d'alimentation du moteur 2 et en une vitesse cible de rotation de l'arbre rotatif du moteur électrique 2. Dans le présent mode de réalisation, la conversion de la commande de couple de serrage à atteindre en une intensité de courant d'alimentation du moteur électrique 2 à atteindre et en une vitesse de rotation cible de l'arbre rotatif du moteur électrique 2 est contrôlée par l'organe de contrôle de décélération 5 par une loi de commande adaptée comme par exemple à flux orienté (« field-oriented control » en terminologie anglo-saxonne).

Le moteur 2 provoque alors le déplacement d'un actionneur des moyens mécaniques de serrage du frein 3 qui est fonction de l'intensité du courant d'alimentation électrique du moteur 2 et de la vitesse de rotation de l'arbre rotatif du moteur 2 (et donc de la commande de couple de serrage) de manière à ce que les moyens mécaniques de serrage du frein 3 opèrent un freinage d'une roue du véhicule à laquelle ils sont associés. Lors du freinage, le couple de freinage réel est différent du couple de serrage qui a été commandé, notamment à cause de l'influence de facteurs environnementaux, tels que la température ou l'état de la route. Selon l'invention, le couple de serrage du frein est régulé grâce à un indicateur, dit observateur de couple de réaction, qui caractérise au moins une réaction des moyens mécaniques de serrage du frein 3 à l'action du moteur électrique 2 sur ces moyens mécaniques de serrage du frein 3. L'utilisation de cet observateur permet d'estimer le couple de réaction des moyens mécaniques de freinage sans avoir besoin d'utiliser un capteur de force.

L'observateur de couple de réaction (Obs$_{CR}$) 6 est estimé en fonction de la vitesse de rotation 7 de l'arbre rotatif du moteur et de l'intensité 8 du courant d'alimentation électrique du moteur électrique 2. Cette vitesse 7 et cette intensité 8 sont soit mesurées soit estimées selon des techniques connues qui ne seront pas détaillées ici. Dans le cas présent, le moteur 2 est un moteur triphasé. Le procédé comprend une étape de transformation des trois courants du moteur triphasé en un courant direct d'intensité nulle et un courant quadratique, l'intensité du courant d'alimentation électrique du moteur électrique utilisée pour la détermination de l'observateur de couple de réaction 6 correspondant à l'intensité du courant quadratique 8 du moteur électrique 2.

Dans le présent mode de réalisation, l'observateur de couple de réaction (Obs$_{CR}$) 6 est estimé selon la relation suivante :

[Math.1]

$$Obs_{CR} = \left( \left( (I_q \times K_n) + (J_n \times wc \times \Omega_m) \right) - \left( \Delta j \times \omega - \Delta k \times I_q \right) - C \right) \times \left( p \frac{wc}{+wc} \right) - (J_n \times wc \times \Omega_m)$$

dans laquelle,

I$_q$ correspond à l'intensité 8 du courant quadratique d'alimentation électrique du moteur électrique 2,

K$_n$ correspond au coefficient nominal de couple du moteur 2,

J$_n$ correspond à l'inertie nominale du moteur 2,

wc correspond à la fréquence de coupure d'un filtre passe bas,

$\Omega_m$ correspond à la vitesse de rotation 7 de l'arbre rotatif du moteur 2,

p correspond à la variable de Laplace,

$\Delta$j correspond à la variation de la valeur d'inertie du frein,

$\Delta$k correspond à la variation de la valeur du couple de serrage du frein,

C correspond au coefficient de friction nominal du frein, et

$\omega$ correspond à l'accélération de la rotation de l'arbre rotatif du moteur électrique.

En outre, afin de réduire les bruits, le procédé comprend en outre une étape de détermination d'un indicateur, dit observateur de perturbation du couple de serrage 9, qui caractérise au moins une perturbation susceptible de perturber la détermination de l'observateur de couple de réaction 6, en fonction de la vitesse de rotation 7 de l'arbre rotatif du moteur électrique 2 et de l'intensité 8 courant d'alimentation électrique 6 du moteur électrique 2.

L'observateur de perturbation du couple de serrage du frein (Obs$_{CS}$) 9 est estimé selon la relation suivante :

[Math.2]

$$Obs_{CS} = \left( \left( \left( I_q \times K_n \right) + \left( J_n \times wc \times \Omega_m \right) \right) \times \left( \frac{wc}{p + wc} \right) \right) + \left( J_n \times wc \times \Omega_m \right)$$

dans laquelle,

I$_q$ correspond à l'intensité 8 du courant quadratique d'alimentation électrique du moteur électrique,

K$_n$ correspond au coefficient nominal de couple du moteur,

J$_n$ correspond à l'inertie nominale du moteur,

wc correspond à la fréquence de coupure d'un filtre passe bas,

$\Omega_m$ correspond à la vitesse de rotation 7 de l'arbre rotatif du moteur, et

p correspond à la variable de Laplace.

Une fois que l'observateur de couple de réaction 6, qui permet d'estimer le couple de réaction des moyens mécaniques de serrage du frein 3, et l'observateur de perturbation du couple de serrage 9 ont été déterminés, par les relations ci-dessus, ces informations sont transmises à l'organe de contrôle de la décélération 5 afin de réguler le couple de serrage du frein, par exemple en commandant une augmentation ou une diminution de la commande de serrage au moteur électrique 2.

Comme le montre les figures 2 et 3, l'application de ces relations permet d'obtenir une bonne estimation du couple de réaction des moyens mécaniques de serrage du frein 3 en prenant en compte d'éventuels bruits, grâce à l'observateur de perturbation du couple de serrage, et donc de réguler le couple de serrage du frein de manière précise. Ces figures représentent une simulation de l'estimation du couple de réaction des moyens mécaniques de serrage du frein 3 à l'aide du procédé présenté ci-dessus. La commande cible de couple de serrage est représentée en trait plein et l'estimation obtenue avec le procédé présenté ci-dessus est représentée en pointillés. On observe que le procédé permet d'estimer fidèlement le couple de réaction, ce qui montre que le procédé fonctionne.

L'invention n'est pas limitée aux modes de réalisation présentés et d'autres modes de réalisation apparaîtront clairement à l'homme du métier. Notamment, dans d'autres modes de réalisation, d'autres relations que celles indiquées dans le présent exemple sont utilisés pour l'observateur de couple de réaction et/ou l'observateur de perturbation du couple de serrage du frein.

**Liste de références**

1 : frein électromécanique

2 : moteur électrique

3 : moyens mécaniques de serrage du frein

4 : commande de serrage brute

5 : organe de contrôle de décélération

6 : observateur de couple de réaction

7 : vitesse de rotation de l'arbre rotatif du moteur

8 : intensité du courant d'alimentation électrique du moteur

9 : observateur de perturbation du couple de serrage

10 : unité de contrôle électronique

11 : réducteur mécanique

**Revendications**

1. Procédé de commande de couple de serrage d'un frein électromécanique (1) pour véhicule automobile, le frein comportant un moteur électrique (2) muni d'un arbre rotatif destiné à entrainer des moyens mécaniques de serrage du frein (3),
**caractérisé en ce qu'**il comprend les étapes suivantes :

   - détermination d'un indicateur, dit observateur de couple de réaction (6), qui caractérise au moins une réaction des moyens mécaniques de serrage du frein (3) à l'action du moteur électrique (2) sur ces moyens mécaniques de serrage (3), en fonction d'une vitesse de rotation (7) de l'arbre rotatif du moteur électrique (2) et d'une intensité (8) d'un courant d'alimentation électrique du moteur électrique (2),
   - détermination d'un indicateur, dit observateur de perturbation du couple de serrage (9), qui caractérise au moins une perturbation susceptible de perturber la détermination de l'observateur de couple de réaction (6), en fonction de la vitesse de rotation (7) de l'arbre rotatif du moteur électrique (2) et de l'intensité (8) du courant d'alimentation électrique du moteur électrique (2), et
   - régulation du couple de serrage du frein en fonction de l'observateur de couple de réaction et de l'observateur de perturbation du couple de serrage.

2. Procédé selon la revendication 1, dans lequel l'observateur de couple de réaction (6) comprend un filtre passe haut configuré pour réduire des perturbations causées par une variation de vitesse du moteur électrique (2).

3. Procédé selon la revendication 1, dans lequel l'observateur de couple de réaction (6) ($Obs_{CR}$) est estimé selon la relation suivante :

[Math.1]
$$Obs_{CR} = \left( \left( \left( I_q \times K_n \right) + \left( J_n \times wc \times \Omega_m \right) \right) - \left( \Delta j \times \omega - \Delta k \times I_q \right) - C \right) \times \left( \frac{wc}{p + wc} \right) - \left( J_n \times wc \times \Omega_m \right)$$

dans laquelle,

   $I_q$ correspond à l'intensité (8) du courant d'alimentation électrique du moteur électrique (2),
   $K_n$ correspond au coefficient nominal de couple du moteur (2),
   $J_n$ correspond à l'inertie nominale du moteur (2),
   wc correspond à la fréquence de coupure d'un filtre passe bas,
   $\Omega_m$ correspond à la vitesse de rotation (7) de l'arbre rotatif du moteur (2),
   p correspond à la variable de Laplace,
   $\Delta j$ correspond à la variation de la valeur d'inertie du frein (1),
   $\Delta k$ correspond à la variation de la valeur du couple de serrage du frein (1),
   C correspond au coefficient de friction nominal du frein (1), et
   $\omega$ correspond à l'accélération de la rotation de l'arbre rotatif du moteur électrique (2).

4. Procédé selon l'une quelconque des revendications précédentes, dans lequel l'observateur de perturbation du couple de serrage (9) comprend un filtre passe bas configuré pour réduire les perturbations de hautes fréquences.

5. Procédé selon la revendication 4, dans lequel l'observateur de perturbation du couple de serrage (9) ($Obs_{CS}$) est estimé selon la relation suivante :

[Math.2]
$$Obs_{CS} = \left( \left( \left( I_q \times K_n \right) + \left( J_n \times wc \times \Omega_m \right) \right) \times \left( \frac{wc}{p + wc} \right) \right) + \left( J_n \times wc \times \Omega_m \right)$$

dans laquelle,

$I_q$ correspond à l'intensité (8) du courant d'alimentation électrique du moteur électrique (2),
$K_n$ correspond au coefficient nominal de couple du moteur (2),
$J_n$ correspond à l'inertie nominale du moteur (2),
wc correspond à la fréquence de coupure du filtre passe bas,
$\Omega_m$ correspond à la vitesse (7) de rotation de l'arbre rotatif du moteur (2), et
p correspond à la variable de Laplace.

6. Procédé selon l'une quelconque des revendications précédentes, dans lequel le moteur électrique (2) est compris dans un ensemble motoréducteur de type irréversible.

7. Procédé selon l'une quelconque des revendications précédentes, dans lequel, le moteur (2) étant un moteur triphasé, le procédé comprend une étape de transformation de trois courants du moteur triphasé en un courant direct d'intensité nulle et un courant quadratique, l'intensité (8) du courant d'alimentation électrique du moteur électrique utilisée pour la détermination de l'observateur de couple de réaction (6) et/ou de l'observateur de perturbation du couple de serrage (9) correspondant à l'intensité du courant quadratique du moteur électrique (2).

8. Frein électromécanique (1) pour véhicule automobile comprenant des moyens de mise en œuvre du procédé selon l'une quelconque des revendications 1 à 7.

9. Véhicule automobile comprenant au moins un frein électromécanique (1) selon la revendication 8.

**Patentansprüche**

1. Verfahren zur Steuerung des Anzugsmoments einer

    elektromechanische Bremse (1) für Kraftfahrzeug, wobei die Bremse einen Elektromotor (2) aufweist, der mit einer drehbaren Welle versehen ist, die zum Antreiben mechanischer Anzugsmittel (3) zum Anziehen der Bremse bestimmt ist,
    **dadurch gekennzeichnet, dass** es die folgenden Schritte umfasst:

    - Bestimmen eines Indikators, so genannter Beobachter des Reaktionsmoments (6), der wenigstens eine Reaktion der mechanischen Anzugsmittel (3) zum Anziehen der Bremse auf die Aktion des Elektromotors (2) auf diese mechanischen Anzugsmittel (3) charakterisiert, in Abhängigkeit von einer Drehzahl (7) der drehbaren Welle des Elektromotors (2) und von einer Stärke (8) eines elektrischen Versorgungsstroms des Elektromotors (2),
    - Bestimmen eines Indikators, so genannter Beobachter von Störgrößen des Anzugsmoments (9), der wenigstens eine Störgröße charakterisiert, die das Bestimmen des Beobachters des Reaktionsmoments (6) stören könnte, in Abhängigkeit von der Drehzahl (7) der drehbaren Welle des Elektromotors (2) und von der Stärke (8) des elektrischen Versorgungsstroms des Elektromotors (2), und
    - Regeln des Anzugsmoments der Bremse in Abhängigkeit von dem Beobachter des Reaktionsmoments und von dem Beobachter von Störgrößen des Anzugsmoments.

2. Verfahren nach Anspruch 1, wobei der Beobachter des Reaktionsmoments (6) ein Hochpassfilter umfasst, das dazu ausgelegt ist, Störgrößen zu reduzieren, die durch eine Änderung der Geschwindigkeit des Elektromotors (2) verursacht werden.

3. Verfahren nach Anspruch 1, wobei der Beobachter des Reaktionsmoments (6) (ObsCR) gemäß der folgenden Beziehung geschätzt wird:

[Math. 1]

$$Obs_{CR} = \left( \left( \left( I_q \times K_n \right) + \left( J_n \times wc \times \Omega_m \right) \right) - \left( \Delta j \times w - \Delta k \times I_q \right) - C \right) \times \left( \frac{wc}{p + wc} \right) - \left( J_n \times wc \times \Omega_m \right)$$

wobei

$I_q$ der Stärke (8) des elektrischen Versorgungsstroms des Elektromotors (2) entspricht,

K$_n$ dem nominalen Drehmoment-Koeffizienten des Motors (2) entspricht,

J$_n$ der nominalen Trägheit des Motors (2) entspricht,

wc der Grenzfrequenz eines Tiefpassfilters entspricht,

$\Omega_m$ der Drehzahl (7) der drehbaren Welle des Motors (2) entspricht, p der Laplace-Variablen entspricht,

$\Delta$j der Änderung des Trägheitswerts der Bremse (1) entspricht,

$\Delta$jk der Änderung der Wertes des Anzugsmoments der Bremse (1) entspricht,

C dem nominalen Reibungs-Koeffizienten der Bremse (1) entspricht und

$\omega$ der Beschleunigung der Drehung der drehbaren Welle des Elektromotors (2) entspricht.

4. Verfahren nach einem der vorangehenden Ansprüche, wobei der Beobachter von Störgrößen des Anzugsmoments (9) ein Tiefbassfilter umfasst, das dazu ausgelegt ist, die Hochfrequenzstörungen zu reduzieren.

5. Verfahren nach Anspruch 4, wobei der Beobachter von Störgrößen des Anzugsmoments (9) (ObsCR) gemäß der folgenden Beziehung geschätzt wird:

[Math. 2]

$$Obs_{CS} = \left( \left( \left( I_q \times K_n \right) + \left( J_n \times wc \times \Omega_m \right) \right) \times \left( \frac{wc}{p + wc} \right) \right) + \left( J_n \times wc \times \Omega_m \right)$$

wobei

I$_q$ der Stärke (8) des elektrischen Versorgungsstroms des Elektromotors (2) entspricht,

K$_n$ dem nominalen Drehmoment-Koeffizienten des Motors (2) entspricht,

J$_n$ der nominalen Trägheit des Motors (2) entspricht,

wc der Grenzfrequenz eines Tiefpassfilters entspricht,

$\Omega_m$ der Drehzahl (7) der drehbaren Welle des Motors (2) entspricht, p der Laplace-Variablen entspricht.

6. Verfahren nach einem der vorangehenden Ansprüche, wobei der Elektromotor (2) in einer Getriebemotoranordnung des irreversiblen Typs enthalten ist.

7. Verfahren nach einem der vorhergehenden Ansprüche, wobei, wenn der Motor (2) ein Drehstrommotor ist, das Verfahren einen Schritt des Umwandelns von drei Strömen des Drehstrommotors in einen Gleichstrom der Stärke Null und einen quadratischen Strom umfasst, wobei die Stärke (8) des elektrischen Versorgungsstroms des Elektromotors, die zum Bestimmen des Beobachters des Reaktionsmoments (6) und/oder des Beobachters für Störgrößen des Anzugsmoments (9) verwendet wird, der Stärke des quadratischen Stroms des Elektromotors (2) entspricht.

8. Elektromechanische Bremse (1) für Kraftfahrzeug, umfassend Mittel zur Durchführung des Verfahrens nach einem der Ansprüche 1 bis 7.

9. Kraftfahrzeug, wenigstens umfassend eine elektromechanische Bremse (1) nach Anspruch 8.

## Claims

1. A Method for controlling the clamping torque of an electromechanical brake (1) for a motor vehicle, the brake comprising an electric motor (2) equipped with a rotating shaft intended to drive mechanical brake clamping means (3),

   **characterised in that** it comprises the following steps:

   - determination of an indicator, called reaction torque observer (6), which characterises at least one reaction of the mechanical brake clamping means (3) to the action of the electric motor (2) on these mechanical clamping means (3), as a function of a speed of rotation (7) of the rotating shaft of the electric motor (2) and of an intensity (8) of an electrical supply current to the electric motor (2),
   - determination of an indicator, called clamping torque disturbance observer (9), which characterises at least one disturbance which may disturb the determination of the reaction torque observer (6), as a function of the speed of rotation (7) of the rotating shaft of the electric motor (2) and of the intensity (8) of the electrical supply current to the electric motor (2), and
- regulation of the brake clamping torque as a function of the reaction torque observer and of the clamping torque disturbance observer.

2. The method according to claim 1, wherein the reaction torque observer (6) comprises a high-pass filter configured to reduce disturbances caused by a variation in speed of the electric motor (2).

3. The method according to claim 1, wherein the reaction torque observer (6) ($Obs_{CR}$) is estimated according to the following relationship:

[Math.1]

$$Obs_{CR} = \left(\left((I_q \times K_n) + (J_n \times wc \times \Omega_m)\right) - (\Delta j \times \omega - \Delta k \times I_q) - C\right) \times \left(\frac{wc}{p+wc}\right) - (J_n \times wc \times \Omega_m)$$

in which,

$I_q$ corresponds to the intensity (8) of the electrical current supplied to the electric motor (2),
$K_n$ corresponds to the nominal torque coefficient of the motor (2),
$J_n$ corresponds to the nominal inertia of the motor (2),
wc corresponds to the cut-off frequency of a low-pass filter,
$\Omega_m$ corresponds to the speed of rotation (7) of the rotating shaft of the motor (2),
p corresponds to the Laplace variable,
$\Delta j$ corresponds to the variation of the inertia value of the brake (1),
$\Delta k$ corresponds to the variation of the value of the clamping torque of the brake (1),
C corresponds to the nominal coefficient of friction of the brake (1), and
$\omega$ corresponds to the acceleration of the rotation of the rotating shaft of the electric motor (2).

4. The method according to any one of the preceding claims, wherein the clamping torque disturbance observer (9) comprises a low-pass filter configured to reduce highfrequency disturbances.

5. The method according to claim 4, wherein the clamping torque disturbance observer (9) ($Obs_{CS}$) is estimated according to the following relationship:

[Math.2]

$$Obs_{CS} = \left(\left((I_q \times K_n) + (J_n \times wc \times \Omega_m)\right) \times \left(\frac{wc}{p + wc}\right)\right) + (J_n \times wc \times \Omega_m)$$

in which,

$I_q$ corresponds to the intensity (8) of the electrical current supplied to the electric motor (2),
$K_n$ corresponds to the nominal torque coefficient of the motor (2),
$J_n$ corresponds to the nominal inertia of the motor (2),
wc corresponds to the cut-off frequency of the low-pass filter,
$\Omega_m$ corresponds to the speed of rotation (7) of the motor (2), and
p corresponds to the Laplace variable.

6. The method according to any one of the preceding claims, in which the electric motor (2) is included in a gearmotor assembly of the irreversible type.

7. The method according to any one of the preceding claims, wherein, the motor (2) being a three-phase motor, the method comprises a step of transforming three currents of the three-phase motor into a direct current of zero intensity and a quadratic current, the intensity (8) of the electric current supplied to the electric motor used for determining the reaction torque observer (6) and/or the clamping torque disturbance observer (9) corresponding to the intensity of the quadratic current of the electric motor (2).

8. An electromechanical brake (1) for a motor vehicle comprising means for implementing the method according to any one of claims 1 to 7.

9. Motor vehicle comprising at least one electromechanical brake (1) according to claim 8.

[Fig. 1]

[Fig. 2]

[Fig. 3]

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019151146 A1